(19) Europäisches Patentamt / European Patent Office / Office européen des brevets

(11) **EP 4 060 559 B1**

(12) **EUROPÄISCHE PATENTSCHRIFT**

(45) Veröffentlichungstag und Bekanntmachung des Hinweises auf die Patenterteilung:
**10.01.2024 Patentblatt 2024/02**

(21) Anmeldenummer: **21162647.8**

(22) Anmeldetag: **15.03.2021**

(51) Internationale Patentklassifikation (IPC):
**G06N 3/02** (2006.01)  **H02J 3/00** (2006.01)

(52) Gemeinsame Patentklassifikation (CPC):
**H02J 3/001; G06N 3/08**

(54) **TRAININGSDATENSATZ, TRAINING SOWIE KÜNSTLICHES NEURONALES NETZ FÜR DIE ZUSTANDSSCHÄTZUNG EINES STROMNETZES**

TRAINING DATA SET, TRAINING AND ARTIFICIAL NEURAL NETWORK FOR ESTIMATING THE CONDITION OF A POWER NETWORK

ENSEMBLE DE DONNÉES D'APPRENTISSAGE, APPRENTISSAGE, AINSI QUE RÉSEAU NEURAL ARTIFICIEL POUR L'ÉVALUATION DE L'ÉTAT D'UN RÉSEAU ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**21.09.2022 Patentblatt 2022/38**

(73) Patentinhaber: **Siemens Aktiengesellschaft 80333 München (DE)**

(72) Erfinder:
• **Duckheim, Mathias 91052 Erlangen (DE)**
• **Schölling, Manja Babea 52066 Aachen (DE)**
• **Werner, Thomas 91126 Rednitzhembach (DE)**

(74) Vertreter: **Siemens Patent Attorneys Postfach 22 16 34 80506 München (DE)**

(56) Entgegenhaltungen:
**US-A1- 2020 327 264    US-B1- 10 546 054**

**Beschreibung**

Die Erfindung betrifft ein Verfahren zum Erstellen eines Trainingsdatensatzes gemäß dem Oberbegriff des Patentanspruches 1 und ein Verfahren zum Trainieren eines künstlichen neuronalen Netzes gemäß dem Oberbegriff des Patentanspruches 12.

Eine Zustandsschätzung eines elektrischen Versorgungsnetzes (Stromnetz) betrifft eine möglichst vollständige und konsistente Ermittlung des Zustandes des Stromnetzes aus einer Mehrzahl von Messungen. Hierbei ist der Zustand eines Stromnetzes durch die Spannungen und Winkeln an seinen Netzknoten gekennzeichnet.

Messungen weisen grundsätzlich Messabweichungen auf, die insbesondere in Kommunikationsverzögerungen und/oder Konfigurationsfehlern begründet sind. Der im Rahmen einer Zustandsschätzung ermittelte Zustand entspricht somit einem Schätzwert des tatsächlichen realen Zustandes des Stromnetzes. Mit anderen Worten wird mittels einer Zustandsschätzung der Zustand ermittelt, welcher im Sinne eines Optimierungsproblems am besten zu den Messungen beziehungsweise den Messwerten und dem physikalischen Wirkzusammenhängen in einem Stromnetz passt. Auch wenn lediglich eine Schätzung des tatsächlichen Zustandes erreicht werden kann, so bildet der ermittelte, das heißt der geschätzte Zustand des Stromnetzes die Grundlage für mehrere übergeordnete Netzanwendungen, beispielsweise für Sicherheitsberichte, Spannungssteuerungen und/oder vorbeugende und korrigierende SCOPF (englisch: Security Constrained Optimal Power Flow).

Der Zustand eines Stromnetzes ist zeitabhängig, sodass eine Zustandsschätzung typischerweise in regelmäßigen Zeitabschnitten erfolgt. Beispielsweise weisen bekannte Überwachungs-, Steuerungs- und Datenerfassungssysteme (englisch:
Supervisory Control and Data Acquisition; abgekürzt SCADA) für eine Zustandsschätzung einen Zeitabschnitt von etwa einer Minute auf. Mit anderen Worten besteht die technische Herausforderung darin, dass die Zustandsschätzung in Echtzeit erfolgen muss, damit die übergeordneten Netzanwendungen angewendet und abgeschlossen werden können. Eine weitere technische Herausforderung besteht darin, dass die in Echtzeit durchgeführte Zustandsschätzung ebenfalls eine ausreichende Genauigkeit aufweisen muss.

Im Hinblick auf das genannte zeitliche Moment ist die Verwendung eines künstlichen neuronalen Netzes (KNN) zur Zustandsschätzung vorteilhaft. Allerdings ist im Gegensatz zu klassischen Verfahren, wie beispielsweise eine Zustandsschätzung mittels eines WLS-Verfahrens (englisch: Weighted Least Square, WLS), dessen Zuverlässigkeit fraglich. Eine Abschätzung der Zuverlässigkeit des neuronalen Netzes wird beispielsweise durch Bestimmen eines maximalen Fehlers beziehungsweise Schätzfehlers eines trainierten maschinellen Lernmodells über einen unabhängigen Testdatensatz ermöglicht.

Allerdings hängt die Zuverlässigkeit des künstlichen neuronalen Netzes grundsätzlich von dem Trainingsdatensatz ab, mittels welchem dieses trainiert, das heißt angelernt wurde.

US2020327264 A1 beschreibt ein Verfahren zum Erstellen eines Trainingssatzes zum Trainieren eines neuronalen Netzes entsprechend des Stands der Technik.

Der vorliegenden Erfindung liegt die Aufgabe zugrunde, einen verbesserten Trainingsdatensatz für ein künstliches neuronales Netz bereitzustellen, welches künstliche neuronale Netz für eine Zustandsschätzung eines Stromnetzes vorgesehen ist. Die Aufgabe wird durch ein Verfahren zum Erstellen eines Trainingsdatensatzes mit den Merkmalen des unabhängigen Patentanspruches 1 und ein Verfahren zum Trainieren eines künstlichen neuronalen Netzes mit den Merkmalen des unabhängigen Patentanspruches 12 gelöst. In den abhängigen Patentansprüchen sind vorteilhafte Ausgestaltungen und Weiterbildungen der Erfindung angegeben.

Das erfindungsgemäße computergestützte Verfahren zum Erstellen eines zweiten Trainingsdatensatzes zum Trainieren eines für eine Zustandsschätzung eines Stromnetzes ausgebildeten künstlichen neuronalen Netzes aus einem bereitgestellten ersten Trainingsdatensatz, der mehrere Trainingspaare umfasst, wobei jedes der Trainingspaare durch einen Messdatensatz und einem zugehörigen Zustand des Stromnetzes gebildet ist, und der jeweilige Messdatensatz wenigstens mit dem Stromnetz assoziierte komplexe Scheinleistungen umfasst, ist gekennzeichnet wenigstens durch die folgenden Schritte:

- Ermitteln wenigstens eines ersten Trainingspaares und eines zugehörigen ersten Messdatensatzes und ersten Zustandes, dessen erster Zustand bezüglich eines Trainings des künstlichen neuronalen Netzes mittels des ersten Trainingsdatensatzes einen Fehler größer oder gleich einer festgelegten Fehlerschranke aufweist;

- Berechnen eines zweiten Zustandes des Stromnetzes mittels einer Lastflussrechnung basierend auf wenigstens einer bezüglich der komplexen Scheinleistung des ersten Messdatensatzes geänderten komplexen Scheinleistung;

- Berechnen eines zweiten Messdatensatzes mittels eines Messmodells des Stromnetzes aus dem berechneten zweiten Zustand; und

- Erstellen des zweiten Trainingsdatensatzes aus dem ersten Trainingsdatensatz durch ein Hinzufügen eines aus dem zweiten Messdatensatz und dem zugehörigen zweiten Zustand gebildeten zweiten Trainingspaares.

Das erfindungsgemäße Verfahren und/oder eine oder mehrere Funktionen, Merkmale und/oder Schritte des erfindungsgemäßen Verfahrens und/oder einer seiner Ausgestaltungen sind computergestützt.

Das künstliche neuronale Netz kann im Folgenden durch KNN abgekürzt werden.

Ein Trainingspaar $(z_t, x_t)$ beziehungsweise ein Trainingsdatensatz ist durch einen Messdatensatz $z_t$ und einen zugehörigen Zustand $x_t$ des Stromnetzes gekennzeichnet. Die grundsätzliche Zeitabhängigkeit der Messdatensätze und der zugehörigen Zustände ist durch den Index $t$ gekennzeichnet. Im Weiteren wird jedoch der Index $t$ aus Übersichtlichkeitsgründen nicht ausgeschrieben.

Ein Zustand des Stromnetzes wird durch die Spannungen $U_n$ und Winkel $\delta_n$ an den Netzknoten $n = 1, ... , N$ des Stromnetzes ausgebildet, das heißt es ist $x_t = (U_{t,n}, \delta_{t,n})$, wobei die abkürzende Schreibweise $(U_{t,n}, \delta_{t,n}) = (U_{t,1}, ... , U_{t,N}, \delta_{t,1}, ... , \delta_{t,N})$ verwendet wird. Diese abkürzende Schreibweise wird auch für weitere Größen, insbesondere den Messdatensatz verwendet.

Ein Messdatensatz umfasst die komplexen Scheinleistungen $S_n = P_n + iQ_n = (P_n, Q_n)$ an den Netzknoten des Stromnetzes. Hierbei ist $P_n$ die Knotenwirkleistungen und $Q_n$ die Knotenblindleistungen des Netzknoten $n$. Die Scheinleistung ist durch den Betrag der komplexen Scheinleistung definiert. Der Messdatensatz umfasst die komplexen Scheinleistungen in dem Sinne, dass diese dem jeweiligen Messdatensatz entnommen werden können beziehungsweise aus diesem, beispielsweise aus Wirkleistung und Blindleistung, ermittelt werden können.

Der Messdatensatz bildet somit beispielsweise einen Messvektor $z = (P_{nm}, Q_{nm}, P_n, Q_n, U_n, \delta_n)$ aus, wobei $P_{nm}$ die Wirkleistungen und $Q_{nm}$ die Blindleistungen der Leitungen (Wirk- und Blindleistungsflüsse), $P_n$ die Knotenwirkleistungen, $Q_n$ die Knotenblindleistungen, $U_n$ die Knotenspannungen und $\delta_n$ die Knotenwinkel des Stromnetzes bezeichnen.

Das künstliche neuronale Netz wird beziehungsweise wurde mittels des ersten Trainingsdatensatzes trainiert. Hierbei werden Messdatensätze dem KNN zugeführt. Aus einem zugeführten Messdatensatz ermittelt das KNN einen zugehörigen Zustand des Stromnetzes.

Die durch das KNN ermittelten Zustände weisen bezüglich eines Testdatensatzes beziehungsweise eines Evaluierungsdatensatzes einen jeweiligen Fehler auf. Der erste Trainingsdatensatz kann den Testdatensatz umfassen, sodass das Training insgesamt (Training und Test) mittels des ersten Trainingsdatensatzes erfolgt. Typischerweise sind jedoch der Trainingsdatensatz und der Testdatensatz zwei getrennte beziehungsweise zwei verschiedene Datensätze.

Gemäß der vorliegenden Erfindung werden in einem ersten Schritt des Verfahrens die Trainingspaare, insbesondere eines Validierungsdatensatzes beziehungsweise Testdatensatzes, ermittelt, die bezüglich des Trainings des KNN oder nach Training der KNN mittels des ersten Trainingsdatensatzes einen Fehler größer oder gleich einer festgelegten Fehlerschranke aufweist. Mit anderen Worten werden Trainingspaare mit einem vergleichsweise großen Fehler ermittelt.

In einem zweiten Schritt des Verfahrens wird ein zweiter Zustand des Stromnetzes mittels einer Lastflussrechnung (englisch: power system simulator) basierend auf wenigstens der bezüglich der komplexen Scheinleistung des ersten Messdatensatzes geänderten komplexen Scheinleistung berechnet.

Mit anderen Worten wird die zu einem im ersten Schritt ermittelten Trainingspaar zugehörige komplexe Scheinleistung numerisch abgeändert, wodurch sich eine neue komplexe Scheinleistung ausbildet. Aus dieser neuen komplexen Scheinleistung wird mittels der Lastflussrechnung ein neuer, der zweite Zustand, berechnet. Das numerische Ändern der Scheinleistung des ermittelten Trainingspaares beziehungsweise des zugehörigen ermittelten Messdatensatzes kann durch eine Änderung ihres Realteils (Wirkleistung), ihres Imaginärteils (Blindleistung) und/oder einer Kombination aus den genannten Änderungen erfolgen.

In einem dritten Schritt des Verfahrens wird ein zweiter Messdatensatzes mittels eines Messmodells des Stromnetzes aus dem berechneten zweiten Zustand berechnet.

Mit anderen Worten wird der zum zweiten Zustand zugehörige Messdatensatz, das heißt ein neuer Messdatensatz, ermittelt. Dies erfolgt mittels des Messmodells des Stromnetzes, die beispielsweise durch eine Messmodellfunktion $z_t = h(x_t) + \varepsilon_t$ mit dem Messfehler-Term $\varepsilon_t$ ausgebildet wird. Die Messfehler können normalverteilt sein. Die Messmodellfunktion ist typischerweise nichtlinear, wobei jedoch eine lineare Messmodellmatrix $H$ mit $h(x) = Hx$ vorgesehen sein kann. Das Messmodell beziehungsweise die Messmodellfunktion ist dadurch gekennzeichnet, dass mittels diesem beziehungsweise dieser aus einem Zustand ein Messdatensatz ermittelt werden kann.

Der ermittelte zweite Messdatensatz bildet zusammen mit dem zugehörigen zweiten Zustand ein neues Trainingspaar aus, nämlich das zweite Trainingspaar.

In einem vierten Schritt des Verfahrens wird das derart gebildete zweite Trainingspaar zum ersten Trainingsdatensatz hinzugefügt. Mit anderen Worten wird der erste Trainingsdatensatz durch ein Hinzufügen des neuen in diesem Sinne synthetisch erzeugten Trainingspaars zum zweiten Trainingsdatensatz erweitert.

Mittels des gegenüber dem ersten Trainingsdatensatz erweiterten zweiten Trainingsdatensatzes kann erneut das KNN oder ein weiteres KNN trainiert werden.

Ein Vorteil der vorliegenden Erfindung ist, dass der zweite Trainingsdatensatz für kritische Szenarien, das heißt für Trainingspaare, die einen vergleichsweise großen Fehler aufweisen, durch seine synthetische Erweiterung mittels des neu erzeugten zweiten Trainingspaares, mehr Daten aufweist. Dadurch wird die Genauigkeit des mittels des zweiten Trainingsdatensatzes trainierten künstlichen neuronalen Netzes ebenso für kritische und somit typischerweise unterrepräsentierte Ereignisse/Szenarien verbessert. Dem Erstellen des zweiten Trainingsdatensatz liegt somit die technische Überlegung zugrunde, für Szenarien in welchen das KNN vergleichsweise schlechte Ergebnisse ermittelt (Fehler größer als die festgelegte Fehlerschranke), die zudem typischerweise selten sind, weitere Daten zum Trainieren des KNN bereitzustellen. Mit anderen Worten umfasst der erfindungsgemäße zweite Trainingsdatensatz in den schlechtesten Fällen (Fehler größer als die festgelegte Fehlerschranke) mehr Daten, sodass die Genauigkeit eines entsprechend trainierten künstlichen neuronalen Netzes in diesen kritischen Fällen verbessert wird.

Ein weiterer Vorteil der vorliegenden Erfindung ist, dass ein langes und zeitlich aufwendiges Sammeln von Daten für seltene Ereignisse, das heißt seltene beziehungsweise unterrepräsentierte Trainingspaare, nicht erforderlich ist. Die Trainingspaare können gemäß der vorliegenden Erfindung synthetisch erzeugt werden.

Weiterhin wird die Auswahl geeigneter Trainingsdaten vereinfacht, da durch die vorliegende Erfindung Trainingsdaten bereitgestellt werden, die anwendungskritische Fälle selbst berücksichtigen. Eine entsprechende Zustandsschätzung, die auf einem entsprechend trainiertem künstlichen neuronalen Netz basiert, kann somit schneller und einfacher für bestehende Stromnetze implementiert werden. Insbesondere werden dadurch ebenfalls die Kosten für eine Inbetriebnahme solcher Zustandsschätzungen deutlich reduziert.

Das gemäß dem zweiten Trainingsdatensatz trainierte künstliche neuronale Netz kann zudem für weitere technische Anwendungen verwendet werden, in denen robuste maschinelle Lernmodelle erforderlich sind, beispielsweise für Sicherheitsberichte, Spannungssteuerungen und/oder vorbeugende und korrigierende SCOPF (englisch: Security Constraint Optimal Power Flow).

Das erfindungsgemäße computergestützte Verfahren zum Trainieren eines künstlichen neuronalen Netzes für eine Zustandsschätzung eines Stromnetzes, ist gekennzeichnet dadurch, dass das künstliche neuronale Netz mittels eines Trainingsdatensatzes (zweiter Trainingsdatensatz) gemäß der vorliegenden Erfindung und/oder einer ihrer Ausgestaltungen trainiert wird.

Ein künstliches neuronales Netz für eine Zustandsschätzung eines Stromnetzes, welches als Eingänge mit dem Stromnetz assoziierte Messwerte und als Ausgang den durch die Zustandsschätzung zu ermittelnden geschätzten Zustand des Stromnetzes aufweist, ist gekennzeichnet dadurch, dass das künstliche neuronale Netz gemäß der vorliegenden Erfindung und/oder einer ihrer Ausgestaltungen trainiert ist.

Ein Verfahren zur Zustandsschätzung eines Stromnetzes mittels eines künstlichen neuronalen Netzes, welches als Eingänge mit dem Stromnetz assoziierte Messwerte und als Ausgang den durch die Zustandsschätzung zu ermittelnden geschätzten Zustand des Stromnetzes aufweist, ist gekennzeichnet dadurch, dass als neuronales künstliches Netz ein künstliches neuronales Netz gemäß der vorliegenden Erfindung und/oder einer ihrer Ausgestaltungen verwendet wird.

Der Zustandsschätzung liegen somit erfasste Messwerte und in diesem Sinne tatsächlich erfasste Messdaten zugrunde.

Das erfindungsgemäße Verfahren zum Trainieren eines künstlichen neuronalen Netzes sowie das Verfahren zur Zustandsschätzung und das künstliche neuronale Netz weisen zum erfindungsgemäßen Verfahren zum Erstellen eines zweiten Trainingsdatensatzes gleichartige und gleichwertige Vorteile und/oder Ausgestaltungen auf.

Gemäß einer vorteilhaften Ausgestaltung der Erfindung werden die Trainingspaare des ersten Trainingsdatensatzes durch jeweils eine Lastflussrechnung erzeugt.

Mit anderen Worten ist bereits der erste Trainingsdatensatz ein in diesem Sinne synthetisch erzeugter Datensatz.

In einer vorteilhaften Weiterbildung der Erfindung werden die Trainingspaare aus synthetisch erzeugten komplexen Scheinleistungen mittels einer jeweiligen Lastflussrechnung erzeugt, wobei die komplexen Scheinleistungen aus historischen und/oder synthetischen Zeitreihen für Erzeugung und Verbrauch erzeugt wurden beziehungsweise werden.

Mit anderen Worten wird zunächst für realistische Zeitreihen der Stromerzeugung und/oder Stromverbrauchs (auch Speicherung) innerhalb des Stromnetzes die zugehörigen komplexen Einspeise- beziehungsweise komplexen Ausspeise-Scheinleistungen ermittelt. Die Zeitreihen können hierbei historisch und/oder synthetisch erzeugt sein. Beispielsweise werden die Zeitreihen durch synthetische Bedarfszeitreihen von Photovoltaikanlagen, Windkraftanlagen, industriellen Anlagen, Büroanlagen und/oder dergleichen erzeugt beziehungsweise durch diese bereitgestellt. Dadurch kann für mehrere Netzknoten des Stromnetzes, insbesondere für jeden Netzkonten des Stromnetzes, eine zugehörige komplexe Scheinleistung $S_{t,n} = (P_{t,n}, Q_{t,n})$ ermittelt werden. Anschließend wird wiederum mittels einer Lastflussrechnung $F_{PF}$: $S_{t,n} \rightarrow (U_{t,n}, \delta_{t,n})$ aus diesen komplexen Scheinleistungen ein Zustand des Stromnetzes berechnet. Dadurch wird sinnbildlich ein tatsächlicher oder ein wahrer Zustand $x_t = (U_{t,n}, \delta_{t,n})$ des Stromnetzes ermittelt. Der zu diesem Zustand $x_t$ zugehörige Messdatensatz $z_t$ kann dann wiederum mittels der Modellmessfunktion durch $z_t = h(x_t) + \varepsilon_t$ ermittelt werden. Dadurch können die Trainingspaare $(z_t, x_t)$ des ersten Trainingsdatensatzes erzeugt werden.

Der erste Trainingsdatensatz sollte bevorzugt wenigstens 100, besonders bevorzugt wenigstens 1000 Trainingspaare umfassen.

Gemäß einer vorteilhaften Ausgestaltung der Erfindung wird wenigstens eine komplexe Scheinleistung des ersten Messdatensatzes durch eine Addition von normalverteilten Zufallszahlen geändert.

Mit anderen Worten wird wenigstens eine Scheinleistung eines Netzknoten, bevorzugt mehrere Scheinleistungen von zugehörigen mehreren Netzknoten, durch $S_t \rightarrow S_t + \Delta S$ mit $\Delta S$ normalverteilt geändert. Dadurch ergibt sich die neue Scheinleistung

$$S_t' = S_t + \Delta S$$

, die der Lastflussrechnung gemäß des zweiten Schrittes zugrunde gelegt wird. Vorteilhafterweise können dadurch entsprechend der Verteilung von $\Delta S$ mehrere Zustände und somit mehrere Trainingspaare für das kritische Szenario $S_t$ zum zweiten Trainingsdatensatz hinzugefügt werden.

Alternativ oder ergänzend kann bevorzugt die wenigstens eine komplexe Scheinleistung des ersten Messdatensatzes durch eine Skalierung geändert werden. Mit andren Worten ist in diesem Fall $S_t' = \alpha S_t$ mit $\alpha$ der Skalierungsfaktor. Beispielsweise ist $\alpha$ = 1 - $\beta$, wobei $\beta$ die Abweichung von der ursprünglichen komplexen Scheinleistung bemisst. Bevorzugt ist $\beta \in$ [0,0.2], das heißt es wird maximal eine Änderung/Abweichung von 20 Prozent verwendet.

In einer vorteilhaften Weiterbildung der Erfindung wird eine der komplexen Scheinleistungen des ersten Messdatensatzes geändert, wenn deren Betrag größer oder gleich einem festgelegten Schwellenwert ist.

Mit anderen Worten werden bevorzugt die komplexen Scheinleistungen an den Netzknoten geändert, deren Netzknoten eine vergleichsweise betragsmäßige erhöhte Scheinleistung aufweisen. Der Betrag der komplexen Scheinleistung ist die Scheinleistung, sodass an diesen Netzknoten die Scheinleistung erhöht ist. Dies ist beispielsweise an Netzknoten der Fall, an welchen erhöht eingespeist, beispielsweise durch erneuerbare Energieerzeuger, oder erhöht ausgespeist wird.

Gemäß einer bevorzugten Ausgestaltung der Erfindung werden die mit den Zuständen des ersten Trainingsdatensatzes assoziierten Fehler durch ein Training des künstlichen neuronalen Netzes mit dem ersten Trainingsdatensatz bestimmt.

Mit anderen Worten umfasst der erste Trainingsdatensatz bevorzugt einen Testdatensatz sowie einen Datensatz, mittels welchem das Anlernen erfolgt. Das angelernte KNN wird dann mittels des Testdatensatzes geprüft, das heißt evaluiert. Hierbei werden die genannten Fehler bestimmt.

Umfasst der erste Trainingsdatensatz zu wenig oder keine Testdaten, so ist es bevorzugt diesen zum Bestimmen der Fehler in zwei Teiltrainingsdatensätze aufzuteilen, wobei der erste Teiltrainingsdatensatz zum Training des künstlichen neuronalen Netzes und der zweite Teiltrainingsdatensatz (Testdatensatz) zur Evaluation der durch das Training ermittelten Zustände verwendet wird.

Dadurch kann vorteilhafterweise ein Testdatensatz bereitgestellt werden. Beispielsweise werden 70 Prozent der Trainingsdaten für das Anlernen und 30 Prozent der Daten für das Testen beziehungsweise für das Evaluieren der durch das Anlernen bestimmten Zustände verwendet.

In einer vorteilhaften Weiterbildung der Erfindung sind die komplexen Scheinleistungen durch mit den Netzknoten assoziierte Wirkleistungen und Blindleistungen ausgebildet.

Mit anderen Worten werden die komplexen Scheinleistungen bevorzugt durch die Knotenwirkleistungen und Knotenblindleistungen ausgebildet.

Gemäß einer vorteilhaften Ausgestaltung der Erfindung wird der erste Messdatensatz und/oder zweite Messdatensatz durch mit den Netzknoten und/oder mit Leitungen des Stromnetzes assoziierte Spannungen, Ströme, Wirkleistungen und/oder Blindleistungen ausgebildet.

Vorteilhafterweise könne dadurch die typischerweise verwendeten Messwerte durch das entsprechend trainierte künstliche neuronale Netz berücksichtigt werden, das heißt als Eingänge zur Ermittlung des Zustandes verwendet werden.

In einer bevorzugten Weiterbildung der Erfindung wird der Zustand des Stromnetzes durch Spannungen und Winkel an einem oder mehreren Netzknoten des Stromnetzes ausgebildet.

Vorteilhafterweise entspricht somit der Ausgang des entsprechend trainierten künstlichen neuronalen Netzes einem Zustand des Stromnetzes, wie er typischerweise definiert und verwendet wird.

Weitere Vorteile, Merkmale und Einzelheiten der Erfindung ergeben sich aus den im Folgenden beschriebenen Ausführungsbeispielen sowie anhand der Zeichnungen. Dabei zeigen schematisiert:

Figur 1　　ein Verlaufsdiagramm der vorliegenden Erfindung; und

Figur 2　　eine mögliche Darstellung eines kritisches Trainingspaares.

Gleichartige, gleichwertige oder gleichwirkende Elemente können in einer der Figuren oder in den Figuren mit denselben Bezugszeichen versehen sein.

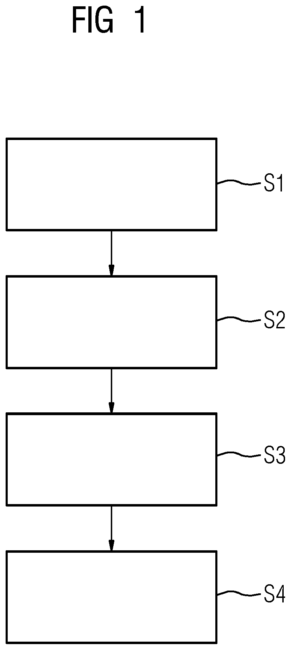

Die Figur 1 zeigt ein schematisches Verlaufsdiagramm der vorliegenden Erfindung.

Bei dem dargestellten Verfahren zum Erstellen eines zweiten Trainingsdatensatzes zum Trainieren eines für eine Zustandsschätzung eines Stromnetzes ausgebildeten künstlichen neuronalen Netzes aus einem bereitgestellten zweiten Trainingsdatensatz, der mehrere Trainingspaare umfasst, wobei jedes der Trainingspaare durch einen Messdatensatz und einem zugehörigen Zustand des Stromnetzes gebildet ist, und der jeweilige Messdatensatz wenigstens mit dem Stromnetz assoziierte komplexe Scheinleistungen umfasst, werden wenigstens die Schritte S1 bis S4 durchgeführt.

Im ersten Schritt S1 des Verfahrens wird wenigstens ein erstes Trainingspaar und ein zugehöriger erster Messdatensatzes und erster Zustand ermittelt, dessen erster Zustand bezüglich eines Trainings des künstlichen neuronalen Netzes mittels des ersten Trainingsdatensatzes einen Fehler größer oder gleich einer festgelegten Fehlerschranke aufweist.

Diese derart ermittelten Trainingspaare werden ebenfalls als kritische Trainingspaare oder kritische Szenarien bezeichnet.

Im zweiten Schritt S2 des Verfahrens wird ein zweiter Zustand des Stromnetzes mittels einer Lastflussrechnung basierend auf wenigstens einer bezüglich der komplexen Scheinleistung des ersten Messdatensatzes geänderten komplexen Scheinleistung berechnet.

Die komplexe Scheinleistung eines kritischen Trainingspaares kann ebenfalls als kritische komplexe Scheinleistung bezeichnet werden.

Im dritten Schritt S3 des Verfahrens wird ein zweiter Messdatensatz mittels eines Messmodells des Stromnetzes aus dem berechneten zweiten Zustand berechnet.

Im vierten Schritt S4 des Verfahrens wird der zweite Trainingsdatensatz aus dem ersten Trainingsdatensatz durch ein Hinzufügen eines aus dem zweiten Messdatensatz und dem zugehörigen zweiten Zustand gebildeten zweiten Trainingspaares erstellt.

Durch die Schritte S1 bis S4 wird somit ein neuer Trainingsdatensatz, das heißt der zweite Trainingsdatensatz erstellt, der bezüglich kritischer Trainingspaare/Szenarien mehr Daten aufweist. Dadurch wird ein entsprechend trainiertes künstliches neuronales Netz in seiner Genauigkeit bezüglich einer Zustandsschätzung des Stromnetzes verbessert.

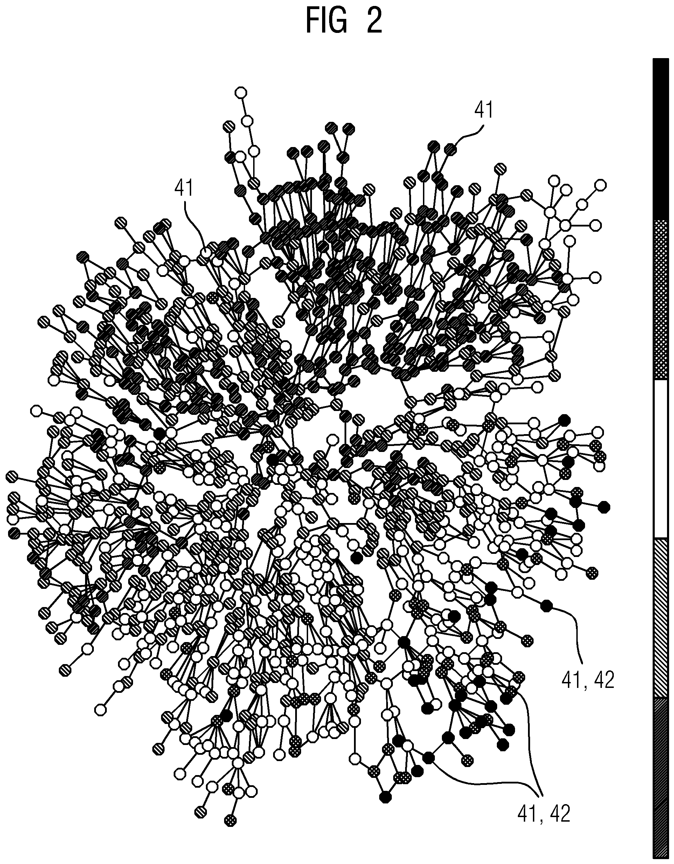

Die Figur 2 zeigt ein schematisiertes Stromnetz 1 mit seinen zugehörigen Netzknoten 41, wobei aus Übersichtsgründen lediglich zwei Netzknoten des Stromnetzes durch das Bezugszeichen 41 gekennzeichnet sind. Mit anderen Worten zeigt die Figur 2 ein Trainingspaar im Sinne der vorliegenden Erfindung und/oder einer ihrer Ausgestaltungen, wobei lediglich die Scheinleistungen des zugehörigen Messdatensatzes dargestellt sind.

In der Figur 2 sind die Netzknoten 41 verschieden schraffiert, wobei die verschiedenen Schraffierungen die verschiedenen Werte der Scheinleistung (Betrag der komplexen Scheinleistung) kennzeichnen. Somit ist mit jedem Netzknoten 41 eine Scheinleistung assoziiert.

Weiterhin weist das Stromnetz Netzknoten 41 auf, die eine vergleichsweise hohe Scheinleistung aufweisen. Diese Netzknoten sind in der Figur zusätzlich durch das Bezugszeichen 42 gekennzeichnet. Mit anderen Worten weisen diese Netzkonten 42 eine Scheinleistung auf, die größer oder gleich einem festgelegten Schwellenwert ist. Beispielsweise liegt eine solche vergleichsweise hohe Scheinleistung durch die Einspeisung einer oder mehrerer Photovoltaikanlagen vor. Mit anderen Worten wird in Figur 2 ein kritisches Trainingspaar im Sinne der vorliegenden Erfindung dargestellt beziehungsweise verdeutlicht.

Typischerweise weisen die Netzknoten 42 bei einem Training eines künstlichen neuronalen Netzes einen vergleichsweise hohen Fehler auf, das heißt, dass ihr Fehler größer oder gleich einer festgelegten Fehlerschranke ist. Das ist zum einen deshalb der Fall, da die Netzknoten 41 typischerweise eine hohe Varianz bezüglich der Scheinleistung und/oder ihres Zustandes aufweisen und weiterhin unterrepräsentiert innerhalb eines Trainingsdatensatzes sind.

Gemäß einer Ausgestaltung der vorliegenden Erfindung wird nun wenigstens eine Scheinleistung, bevorzugt eines Netzknotens 42, geändert, beispielsweise durch eine Addition einer normalverteilten Zufallszahl. Dadurch bildet sich ein neues zur dargestellten Figur vergleichbares Stromnetz 1 mit wenigstens einer, bevorzugt mehreren geänderten Scheinleistungen aus. Anschließend wird durch eine Lastflussrechnung ein neuer Zustand ermittelt und aus dem neuen Zustand mittels eines Messmodells des Stromnetzes 1 ein neuer Messdatensatz erzeugt. Der neue Zustand und der neue Messdatensatz bildet ein neues Trainingspaar aus, das zum Training einer KNN verwendet werden kann.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

Bezugszeichenliste

S1　　erster Schritt
S2　　zweiter Schritt
S3　　dritter Schritt
S4　　vierter Schritt

1　　　Stromnetz
41　　Netzknoten
42　　kritischer Netzknoten

**Patentansprüche**

1. Computergestütztes Verfahren zum Erstellen eines zweiten Trainingsdatensatzes zum Trainieren eines für eine Zustandsschätzung eines Stromnetzes (1) ausgebildeten künstlichen neuronalen Netzes aus einem bereitgestellten ersten Trainingsdatensatz, der mehrere Trainingspaare umfasst, wobei jedes der Trainingspaare durch einen Messdatensatz und einem zugehörigen Zustand des Stromnetzes (1) gebildet ist, und der jeweilige Messdatensatz wenigstens mit dem Stromnetz assoziierte komplexe Scheinleistungen umfasst, umfassend die Schritte:

　　- (S1) Ermitteln wenigstens eines ersten Trainingspaares und eines zugehörigen ersten Messdatensatzes und ersten Zustandes, dessen erster Zustand bezüglich eines Trainings des künstlichen neuronalen Netzes mittels des ersten Trainingsdatensatzes einen Fehler größer oder gleich einer festgelegten Fehlerschranke aufweist;

- (S2) Berechnen eines zweiten Zustandes des Stromnetzes mittels einer Lastflussrechnung basierend auf wenigstens einer bezüglich der komplexen Scheinleistung des ersten Messdatensatzes geänderten komplexen Scheinleistung;

- (S3) Berechnen eines zweiten Messdatensatzes mittels eines Messmodells des Stromnetzes aus dem berechneten zweiten Zustand; und

- (S4) Erstellen des zweiten Trainingsdatensatzes aus dem ersten Trainingsdatensatz durch ein Hinzufügen eines aus dem zweiten Messdatensatz und dem zugehörigen zweiten Zustand gebildeten zweiten Trainingspaares.

2. Verfahren gemäß Anspruch 1, **gekennzeichnet dadurch, dass** die Trainingspaare des ersten Trainingsdatensatzes durch jeweils eine Lastflussrechnung erzeugt werden.

3. Verfahren gemäß Anspruch 2, **gekennzeichnet dadurch, dass** die Trainingspaare aus synthetisch erzeugten komplexen Scheinleistungen mittels einer jeweiligen Lastflussrechnung erzeugt werden, wobei die komplexen Scheinleistungen aus historischen und/oder synthetischen Zeitreihen für Erzeugung und Verbrauch erzeugt werden.

4. Verfahren gemäß einem der vorhergehenden Ansprüche, **gekennzeichnet dadurch, dass** die wenigstens eine komplexe Scheinleistung des ersten Messdatensatzes durch eine Addition von normalverteilten Zufallszahlen geändert wird.

5. Verfahren gemäß einem der vorhergehenden Ansprüche, **gekennzeichnet dadurch, dass** die wenigstens eine komplexe Scheinleistung des ersten Messdatensatzes durch eine Skalierung geändert wird.

6. Verfahren gemäß einem der vorhergehenden Ansprüche, **gekennzeichnet dadurch, dass** eine der komplexen Scheinleistungen des ersten Messdatensatzes geändert wird, wenn deren Betrag größer oder gleich einem festgelegten Schwellenwert ist.

7. Verfahren gemäß einem der vorhergehenden Ansprüche, **gekennzeichnet dadurch, dass** die mit den Zuständen des ersten Trainingsdatensatzes assoziierten Fehler durch ein Training des künstlichen neuronalen Netzes mit dem ersten Trainingsdatensatz bestimmt werden.

8. Verfahren gemäß Anspruch 7, **gekennzeichnet dadurch, dass** zum Bestimmen der Fehler der erste Trainingsdatensatz in zwei Teiltrainingsdatensätze aufgeteilt wird, wobei der erste Teiltrainingsdatensatz zum Training des künstlichen neuronalen Netzes und der zweite Teiltrainingsdatensatz zur Evaluation der durch das Training ermittelten Zustände verwendet wird.

9. Verfahren gemäß einem der vorhergehenden Ansprüche, **gekennzeichnet dadurch, dass** die komplexen Scheinleistungen durch mit den Netzknoten (41, 42) assoziierte Wirkleistungen und Blindleistungen ausgebildet werden.

10. Verfahren gemäß einem der vorhergehenden Ansprüche, **gekennzeichnet dadurch, dass** der erste Messdatensatz und/oder zweite Messdatensatz durch mit den Netzknoten (41, 42) und/oder mit Leitungen des Stromnetzes (1) assoziierte Spannungen, Ströme, Wirkleistungen und/oder Blindleistungen ausgebildet wird.

11. Verfahren gemäß einem der vorhergehenden Ansprüche, **gekennzeichnet dadurch, dass** der Zustand des Stromnetzes (1) durch Spannungen und Winkel an einem oder mehreren Netzknoten (41, 42) des Stromnetzes (1) ausgebildet wird.

12. Computergestütztes Verfahren zum Trainieren eines künstlichen neuronalen Netzes für eine Zustandsschätzung eines Stromnetzes (1), **gekennzeichnet dadurch, dass** ein Trainingsdatensatzes gemäß einem der vorhergehenden Ansprüche erstellt wird, und dass das künstliche neuronale Netz mittels des erstellten Trainingsdatensatzes trainiert wird.

**Claims**

1. Computer-aided method for creating a second training dataset for training an artificial neural network designed for a state estimation of a power grid (1) from a provided first training dataset comprising multiple training pairs, wherein each of the training pairs is formed by a measurement dataset and an associated state of the power grid (1), and the respective measurement dataset comprises at least complex apparent powers associated with the power grid, comprising the steps of:

- (S1) determining at least one first training pair and an associated first measurement dataset and first state, the first state of which has an error greater than or equal to a defined error limit compared with a training of the artificial neural network by means of the first training dataset;

- (S2) calculating a second state of the power grid by means of a load flow calculation based on at least one complex apparent power modified in comparison with the complex apparent power of the first measurement dataset;

- (S3) calculating a second measurement dataset from the calculated second state by means of a measurement model of the power grid; and

- (S4) creating the second training dataset from the first training dataset by adding a second training pair formed from the second measurement dataset and the associated second state.

2. Method according to Claim 1, **characterized in that** the training pairs of the first training dataset are generated by a specific load flow calculation.

3. Method according to Claim 2, **characterized in that** the training pairs are generated from synthetically generated complex apparent powers by means of a respective load flow calculation, wherein the complex apparent powers are generated from historical and/or synthetic time series for generation and consumption.

4. Method according to one of the preceding claims, **characterized in that** the at least one complex apparent power of the first measurement dataset is modified by an addition of normally distributed random numbers.

5. Method according to one of the preceding claims, **characterized in that** the at least one complex apparent power of the first measurement dataset is modified by a scaling.

6. Method according to one of the preceding claims, **characterized in that** one of the complex apparent powers of the first measurement dataset is modified if the absolute value thereof is greater than or equal to a defined threshold value.

7. Method according to one of the preceding claims, **characterized in that** the errors associated with the states of the first training dataset are determined by a training of the artificial neural network with the first training dataset.

8. Method according to Claim 7, **characterized in that** the first training dataset is divided into two partial training datasets in order to determine the errors, wherein the first partial training dataset is used to train the artificial neural network and the second partial training dataset is used to evaluate the states determined by the training.

9. Method according to one of the preceding claims, **characterized in that** the complex apparent powers are formed by active powers and reactive powers associated with the grid nodes (41, 42).

10. Method according to one of the preceding claims, **characterized in that** the first measurement dataset and/or second measurement dataset is/are formed by voltages, currents, active powers and/or reactive powers associated with the grid nodes (41, 42) and/or with lines of the power grid (1) .

11. Method according to one of the preceding claims, **characterized in that** the state of the power grid (1) is formed by voltages and angles on one or more grid nodes (41, 42) of the power grid (1).

12. Computer-aided method for training an artificial neural network for a state estimation of a power grid (1), **characterized in that** a training dataset according to one of the preceding claims is created, and **in that** the artificial neural network is trained by means of the created training dataset.

## Revendications

1. Procédé assisté par ordinateur d'établissement d'un deuxième ensemble de données d'apprentissage pour l'apprentissage d'un réseau neuronal artificiel constitué pour l'évaluation de l'état d'un réseau (1) électrique, à partir d'un premier ensemble de données d'apprentissage mis à disposition, qui comprend plusieurs paires d'apprentissage, dans lequel chacune des paires d'apprentissage est formée par un ensemble de données de mesure et par un état lui appartenant du réseau (1) électrique, et l'ensemble respectif de données de mesure comprend au moins des puissances apparentes complexes associées au réseau électrique, comprenant les stades :

   - (S1) détermination d'au moins une première paire d'apprentissage et d'un premier ensemble de données de mesure lui appartenant et d'un premier état, dont le premier état a, par rapport à un apprentissage du réseau neuronal artificiel au moyen du premier ensemble de données d'apprentissage, une erreur supérieure ou égale à une bande d'erreur fixée ;

   - (S2) calcul d'un deuxième état du réseau électrique au moyen d'un calcul de flux de charge reposant sur au moins une puissance apparente complexe, modifiée par rapport à la puissance apparente complexe du premier ensemble de données de mesure ;

   - (S3) calcul d'un deuxième ensemble de données de mesure au moyen d'un modèle de mesure du réseau électrique, à partir du deuxième état calculé ; et

   - (S4) établissement du deuxième ensemble de données d'apprentissage, à partir du premier ensemble de données d'apprentissage, par une adjonction d'une deuxième paire d'apprentissage formée à partir du deuxième ensemble de données de mesure et du deuxième état lui appartenant.

2. Procédé suivant la revendication 1, **caractérisé en ce que** l'on produit les paires d'apprentissage du premier ensemble de données d'apprentissage par respectivement un calcul de flux de charge.

3. Procédé suivant la revendication 2, **caractérisé en ce que** l'on produit les paires d'apprentissage au moyen d'un calcul respectif de flux de charge, à partir de puissances apparentes complexes produites synthétiquement, dans lequel on produit les puissances apparentes complexes à partir de séries temporelles historiques et/ou synthétiques de production et de consommation.

4. Procédé suivant l'une des revendications précédentes, **caractérisé en ce que** l'on modifie la au moins une puissance apparente complexe du premier ensemble de données de mesure par une addition de nombres aléatoires distribués normalement.

5. Procédé suivant l'une des revendications précédentes, **caractérisé en ce que** l'on modifie la au moins une puissance apparente complexe du premier ensemble de données de mesure par une mise à l'échelle.

6. Procédé suivant l'une des revendications précédentes, **caractérisé en ce que** l'on modifie l'une des puissances apparentes complexes du premier ensemble de données de mesure, si sa valeur est supérieure ou égale à une valeur de seuil fixée.

7. Procédé suivant l'une des revendications précédentes, **caractérisé en ce que** l'on détermine les erreurs, associées aux états du premier ensemble de données d'apprentissage, par un apprentissage du réseau neuronal artificiel avec le premier ensemble de données d'apprentissage.

8. Procédé suivant la revendication 7, **caractérisé en ce que**, pour la détermination de l'erreur, on subdivise le premier ensemble de données d'apprentissage en deux ensembles de données d'apprentissage partiels, dans lequel on utilise le premier ensemble de données d'apprentissage partiel pour l'apprentissage du réseau neuronal artificiel, et le deuxième ensemble de données d'apprentissage partiel pour l'évaluation des états déterminés par l'apprentissage.

9. Procédé suivant l'une des revendications précédentes, **caractérisé en ce que** l'on forme les puissances apparentes complexes par des puissances actives et des puissances réactives associées aux noeuds (41, 42) du réseau.

10. Procédé suivant l'une des revendications précédentes, **caractérisé en ce que** l'on constitue le premier ensemble de données de mesure et/ou le deuxième ensemble de données de mesure par des tensions, courants, puissances actives et/ou puissances réactives, associés aux noeuds (41, 42) du réseau et/ou à des lignes du réseau (1) électrique.

11. Procédé suivant l'une des revendications précédentes, **caractérisé en ce que** l'on constitue l'état du réseau (1) électrique par des tensions et des angles en un ou en plusieurs noeuds (41, 42) du réseau (1) électrique.

12. Procédé assisté par ordinateur d'apprentissage d'un réseau neuronal artificiel pour une évaluation de l'état d'un réseau (1) électrique, **caractérisé en ce que** l'on établit un ensemble de données d'apprentissage suivant l'une des revendications précédentes, et **en ce que** l'on fait l'apprentissage du réseau neuronal artificiel au moyen de l'ensemble de données d'apprentissage établi.

# FIG 1

# FIG 2

41

41

41, 42

41, 42

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2020327264 A1